# FASCICULE DE BREVET EUROPEEN

(11) **EP 0 965 512 B1**
(45) Date de publication et mention de la délivrance du brevet: **25.02.2004**
(21) Numéro de dépôt: 99420137.4
(22) Date de dépôt: 17.06.1999
(51) Int. Cl.: B61F 5/52, B61F 5/30, B61F 5/32

(54) **Bogie de véhicule ferroviaire et procédé de fabrication d'un longeron d'un tel bogie**
Drehgestell für ein Schienenfahrzeug und Verfahren zur Herstellung eines Längsträgers für solch ein Drehgestell
Bogie of a railway vehicle and process for manufacturing the longitudinal beam of such a bogie

(30) Priorité: 18.06.1998 FR 9807683
(43) Date de publication de la demande: 22.12.1999
(73) Titulaire: Alstom Transport S.A., 75116 Paris (FR)
(72) Inventeur: Landrot, Alain c/o GEC ALSTOM TRANSPORT SA, 71202 Le Creusot cedex (FR)
(74) Mandataire: Myon, Gérard Jean-Pierre

(56) Documents cités:
- EP-A- 0 547 010
- BE-A- 569 676
- DE-A- 1 804 605

## Description

L'invention a trait à un bogie de véhicule ferroviaire et à un procédé de fabrication d'un longeron pour un tel bogie.

Un bogie de véhicule ferroviaire est destiné à supporter un véhicule, tel qu'une caisse ou une motrice, en appui sur plusieurs roues réparties sur des essieux. Compte tenu des masses des caisses et des motrices et de leur vitesse de déplacement, les efforts dûs aux accélérations de ces matériels, notamment lors des changements de direction, sont importants, de sorte qu'il est d'usage de réaliser des bogies sous forme de pièces massives en acier ou de structure mécano-soudée. Ces pièces massives et ces structures mécano-soudées sont rigides et doivent être équipées de systèmes de suspensions et d'amortissement pour assurer le confort des passagers ou l'absorption des vibrations dues aux irrégularités de la voie sur laquelle circule le matériel.

Par la demande de brevet européen 0 031 008, on connaît un bogie de véhicule ferroviaire comprenant des âmes en forme de H réalisées en matériau composite. Ces âmes ne permettent pas d'absorber efficacement les efforts dûs aux accélérations verticales et transversales des pièces en mouvement et ne permettent pas le montage d'éléments accessoires ou de sécurité tels qu'un moteur, un système de freinage ou un système de contrôle. Pour résister efficacement aux contraintes dynamiques auxquelles elles sont soumises, ces âmes devraient avoir une section transversale importante, ce qui entraînerait une consommation importante de matière composite. Ceci majorerait le prix de revient du bogie et pourrait poser des problèmes techniques de moulage.

C'est à ces inconvénients qu'entend plus particulièrement remédier l'invention, en proposant un bogie dont les longerons ont une forme telle qu'ils participent efficacement à la suspension du véhicule.

Dans cet esprit, l'invention concerne un bogie de véhicule ferroviaire, ce bogie étant en appui sur des roues réparties sur au moins deux essieux, des longerons étant prévus pour relier les essieux à une partie centrale du bogie, caractérisé en ce que ces longerons sont formés d'une lame élastique conformée en boucle aplatie et située dans un plan globalement vertical, alors que la lame elle-même est disposée perpendiculairement à ce plan vertical.

Grâce à l'invention, la géométrie du longeron lui permet d'assurer à la fois :
- une fonction de supportage du véhicule entre les essieux,
- une fonction de suspension du véhicule ferroviaire et
- une fonction d'amortissement des vibrations entre les essieux et le véhicule,
- et ce, tout en assurant l'entraînement de la caisse ou de la motrice avec les fonctions de traction, de freinage et de guidage sur la voie.

En outre, la géométrie particulièrement simple du longeron permet d'atteindre un coût attractif, ce qui améliore les performances économiques globales du bogie.

Selon un premier mode de réalisation avantageux de l'invention, la lame élastique est réalisée en matériau composite à base de résine en matière plastique chargée de fibres de renfort. Dans ce cas, le bogie réalisé est sensiblement plus léger que les dispositifs classiques en acier, ce qui permet d'augmenter la charge embarquée sur le véhicule. La souplesse d'un matériau composite lui permet de réaliser un amortissement efficace aux fréquences vibratoires le plus souvent actives dans un bogie. En outre, un bogie en matériau composite conforme à l'invention peut être fabriqué plus facilement qu'un bogie classique, notamment du fait de sa géométrie simple. Le matériau composite peut être à base de résine époxyde, phénolique ou autre et chargée de fibres de verre, de carbone, d'aramide et/ou d'autres fibres spécifiques permettant de détecter une éventuelle défaillance du matériau.

Selon un autre mode de réalisation de l'invention, la lame élastique peut être réalisée en métal, de préférence en acier à ressort. Ce second mode de réalisation permet d'utiliser un matériau classique dont les propriétés sont bien connues dans le domaine de la construction ferroviaire.

Selon un autre aspect avantageux de l'invention, le bogie comprend au moins un amortisseur disposé dans le volume intérieur du longeron. Cet amortisseur est sollicité en fonction des déformations élastiques de la lame formant le longeron.

Selon un autre aspect avantageux de l'invention, la lame élastique est constituée de deux âmes allongées et de deux zones courbes fixées par rapport à des boîtes à essieu des roues. Ainsi, le longeron est fixé à ses deux extrémités grâce aux deux zones courbes. Dans ce cas, on peut prévoir qu'au moins une boîte à essieu comprend une partie en saillie autour de laquelle est disposée une zone courbe de la lame élastique. Avantageusement, cette zone courbe est fixée sur cette partie en saillie par collage ou mécaniquement.

Selon un autre aspect avantageux de l'invention, la partie en saillie comprend deux surfaces globalement opposées contre lesquelles sont aptes à venir en appui des surfaces correspondantes des âmes allongées de la lame élastique. Cette géométrie de la partie en saillie et de la lame élastique évite un pivotement de la lame autour de la partie en saillie, ce qui améliore la fixation entre ces deux éléments.

Selon un autre aspect de l'invention, le bogie comprend deux longerons formés chacun d'une lame élastique, ces longerons étant reliés à un châssis commun. Ce châssis peut supporter le véhicule et être équipé d'un organe de suspension. Dans ce cas, on peut prévoir que chaque longeron est relié au châssis, au niveau d'une âme supérieure et au niveau d'une âme inférieure de la boucle qu'il forme.

L'invention concerne également un procédé de fabrication d'un longeron, dans le cas d'un longeron réalisé en matériau composite tel que précédemment décrit. Ce procédé consiste à :
- enrouler une nappe continue de fibres de renfort, sur au moins un tour, autour de deux plots, de façon à former une boucle autour de ces deux plots et
- faire polymériser une matrice à base de résine autour de ces fibres.

Grâce au procédé de l'invention, un longeron peut être réalisé de façon particulièrement simple et économique.

Selon un aspect avantageux du procédé de l'invention, celui-ci consiste à adapter l'écartement des plots en fonction de l'empattement et/ou de la charge prévue sur le longeron. Selon un autre aspect avantageux, le procédé consiste à adapter le nombre de tours d'enroulement de la nappe autour des plots en fonction des dimensions et/ou de la rigidité prévues du longeron. Le procédé de l'invention présente une grande adaptabilité aux caractéristiques de fonctionnement du longeron, de sorte que plusieurs types de longerons peuvent être fabriqués dans une même installation, ce qui est particulièrement avantageux sur le plan industriel.

L'invention sera mieux comprise et d'autres avantages de celle-ci apparaîtront plus clairement à la lumière de la description qui va suivre de deux modes de réalisation d'un bogie de véhicule ferroviaire et de son procédé de fabrication, conformes à l'invention, donnée uniquement à titre d'exemple et faite en référence aux dessins annexés dans lesquels :
- la figure 1 est une vue de côté d'un bogie de véhicule ferroviaire conforme à l'invention ;
- la figure 2 est une représentation schématique de principe en perspective du bogie de la figure 1, sans les éléments annexes qu'il supporte ;
- la figure 3 est une vue de côté, à plus grande échelle, d'une partie d'un bogie conforme à un second mode de réalisation de l'invention ;
- la figure 4 est une perspective éclatée partielle de certains éléments constitutifs du bogie représenté à la figure 3 ;
- la figure 5 est une représentation schématique de principe d'une étape de fabrication d'un longeron de bogie tel qu'utilisé dans le dispositif des figures 1 à 3 et
- la figure 6 est une vue analogue à la figure 5 lors d'une étape ultérieure de fabrication.

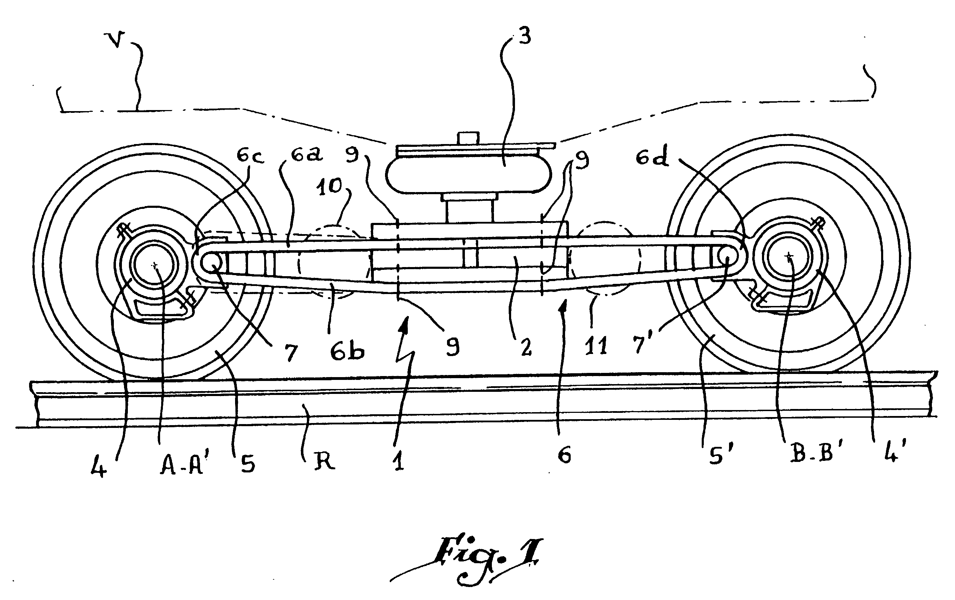

Le bogie 1 représenté à la figure 1 est destiné à supporter un véhicule ferroviaire V, représenté en traits mixtes, en appui sur des rails dont un seul est visible à la figure 1 avec la référence R. Ce bogie 1 comprend un châssis 2 sur lequel est disposé un ensemble 3 de suspension secondaire intercalé entre le châssis 2 et la caisse du véhicule V. Le châssis 2 est supporté par des boîtes à essieu 4 et 4' de deux essieux représentés par des axes A-A' et B-B' de rotation de deux jeux de roues 5 et 5'. Deux longerons 6 et 6' sont tendus entre le châssis 2 et les boîtes à essieu 4 et 4'.

Conformément à l'invention, chaque longeron 6 est formé d'une lame élastique conformée en boucle aplatie.

Plus précisément, le longeron 6 comprend une âme ou traverse supérieure 6a et une âme ou traverse inférieure 6b qui ont une forme globalement allongée et s'étendent sur sensiblement toute la longueur comprise entre deux axes 7 et 7' en saillie par rapport aux boîtes à essieu 4 et 4'. Les longerons 6 comprennent également deux zones courbes 6c et 6d disposées respectivement autour des axes 7 et 7' et reliant les âmes 6a et 6b.

Le longeron 6 est réalisé en matériau composite à base de résine époxyde chargée en fibres de verre. Il s'agit d'une structure légère et présentant d'excellentes propriétés mécaniques, alors que son prix de revient peut être relativement bas. D'autres matériaux composites peuvent être envisagés en fonction des choix technologiques de l'homme du métier.

Les zones courbes 6c et 6d du longeron 6 sont collées sur les axes en saillie 7 et 7' de façon à réaliser un assemblage rigide des boîtes à essieu 4 et 4' avec le longeron 6. L'assemblage par collage est particulièrement adapté à un longeron en matériau composite, car le choix de la colle peut être effectué en fonction de ce matériau.

Le châssis 2 est, quant à lui, fixé par tout moyen adapté et par exemple par des vis, représentées par leurs traits d'axe 9, sur les deux âmes 6a et 6b. Ainsi, le châssis 2 et le longeron 6 constituent un assemblage rigide dans la partie centrale du bogie 1.

Les âmes 6a et 6b peuvent être modèlisées comme des poutres encastrées au niveau des vis 9 et soumises à des efforts verticaux au niveau des zones courbes 6c et 6d. Leur souplesse est mise à profit pour permettre un débattement tel que représenté en traits mixtes sur la gauche de la figure 1. Ce débattement permet donc au longeron 6 d'assurer une fonction de suspension en se déformant.

De plus, la nature du matériau utilisé pour constituer le longeron 6 est telle que celui-ci revient naturellement vers sa position représentée en traits pleins, de sorte qu'il amortit efficacement les vibrations éventuelles créées entre les boîtes à essieu 4 et 4' et le châssis 2.

Le longeron 6' est identique au longeron 6.

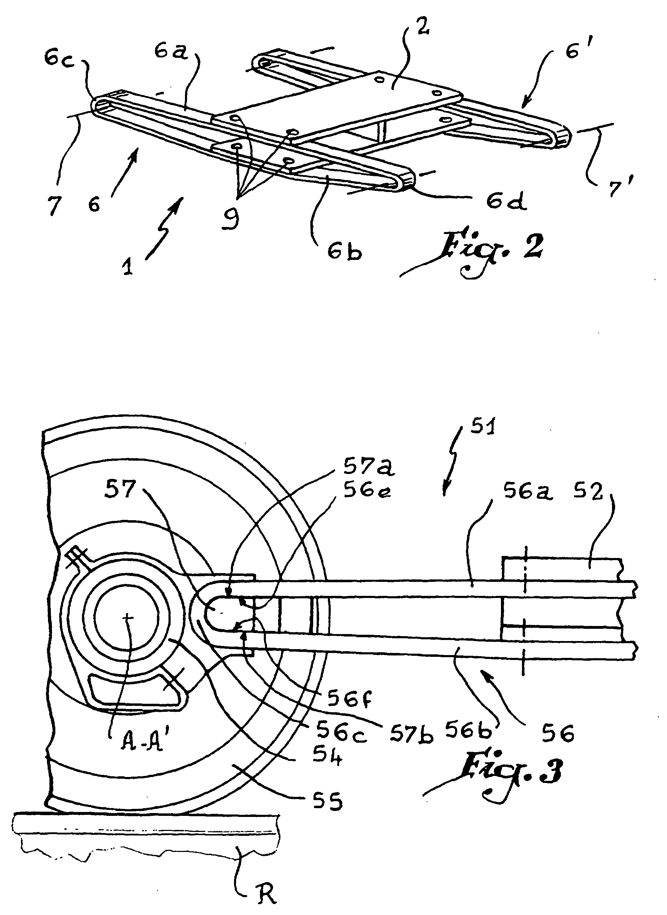

Comme il ressort plus particulièrement de la figure 2, la structure globale du bogie 1 est simple puisqu'il est essentiellement constitué du châssis 2 et des deux longerons 6 et 6', de sorte que son prix de revient est particulièrement attractif, notamment lorsqu'il est réalisé en résine époxyde chargée en fibres de verre.

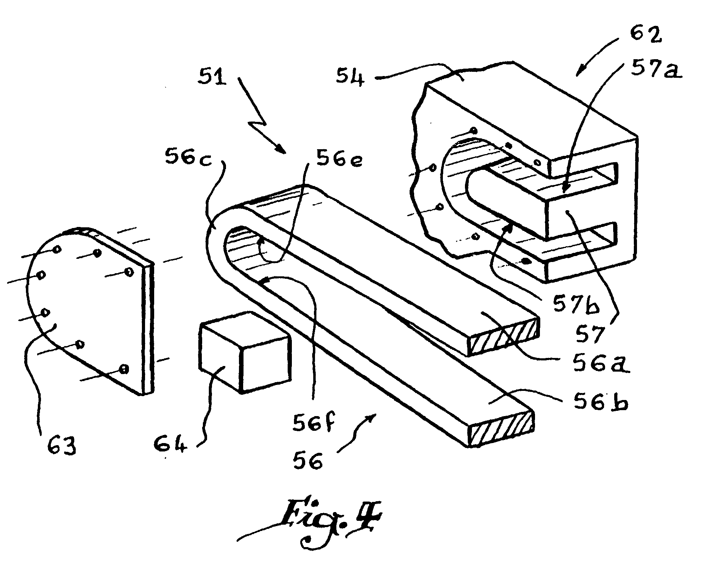

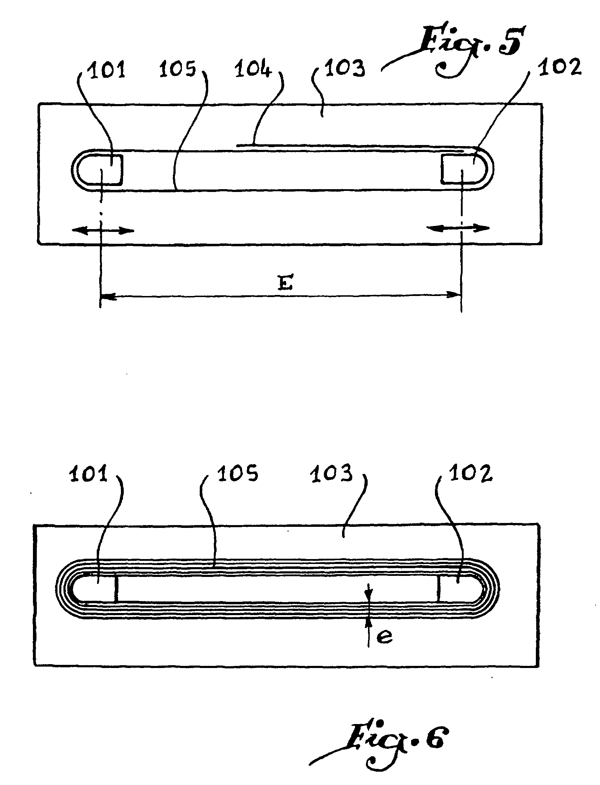

Dans le second mode de réalisation de l'invention représenté aux figures 3 et 4, les éléments analogues à ceux du mode de réalisation des figures 1 et 2 portent des références identiques augmentées de 50. Dans ce mode de réalisation, un bogie 51 comprend un châssis 52 supportant un ensemble de suspension non représenté, alors que des longerons, dont un seul est visible aux figures 3 et 4 avec la référence 56, sont tendus entre le châssis 2 et des boîtes à essieu, dont une seule est visible avec la référence 54, cette boîte à essieu définissant un axe A-A' de rotation de roues 55.

Le longeron 56 est réalisé en acier à ressort et comprend une âme ou traverse supérieure 56a et une âme ou traverse inférieure 56b reliées par deux zones courbes, dont une seule est visible avec la référence 56c. La zone courbe est disposée autour d'une partie en saillie 57 de la boîte à essieu 54 sur laquelle elle est encastrée mécaniquement. Plus précisément, la partie en saillie 57 est en forme de talon et comprend une surface supérieure 57a et une surface inférieure 57b globalement planes contre lesquelles peuvent venir en appui des surfaces correspondantes 56e et 56f appartenant respectivement aux âmes allongées 56a et 56b. Ainsi, aucune rotation du longeron 56 autour de la partie en saillie 57 n'est possible, ce qui améliore l'ancrage du longeron par rapport à la partie en saillie.

La partie en saillie 57 est formée à l'intérieur d'une enveloppe 62 pourvue d'un couvercle 63, cette enveloppe et ce couvercle étant prévus pour enserrer les extrémités des âmes 56a et 56b et la zone courbe 56c autour de la partie en saillie 57. Ceci permet de protéger l'assemblage réalisé entre les longerons 56 et la partie en saillie 57.

Un bloc amortisseur 64, réalisé par exemple en élastomère, est disposé entre les âmes 56a et 56b, ce qui lui permet de réagir aux déformations de ces âmes et donc de contribuer à l'amortissement des vibrations. L'utilisation d'un bloc en élastomère est particulièrement simple ; cependant d'autres dispositifs amortisseurs pourraient être installés dans le volume intérieur du longeron, c'est-à-dire entre les âmes 56a et 56b.

Bien entendu, un amortisseur tel qu'un bloc en élastomère pourrait également être utilisé avec le dispositif du premier mode de réalisation de l'invention représenté aux figures 1 et 2. De même, la géométrie du talon 57 est transposable avec un bogie en matériau composite.

La fabrication d'un longeron en matériau composite, notamment du type de celui représenté aux figures 1 et 2, est décrite en référence aux figures 5 et 6.

Deux plots 101 et 102 sont montés sur une platine 103 et leur écartement E est réglé en fonction de la dimension souhaitée du longeron à fabriquer. Lorsque cet écartement est réglé, une nappe continue 104 de fibres de verre est enroulée autour de ces deux plots 101 et 102 sur au moins un tour, de préférence sur un grand nombre de tours de façon à constituer une boucle fermée 105. Cette boucle est résistante sur le plan mécanique car les fibres de renfort s'étendent sur toute la longueur de la boucle. Lorsque plusieurs tours ont été réalisés, comme représenté à la figure 6, il est possible de disposer l'ensemble ainsi formé à l'intérieur d'une étuve, selon une technique connue dans le domaine des matériaux composites.

Selon une variante avantageuse de l'invention, la nappe 104 peut comprendre une ou plusieurs fibres de détection de défaillance du matériau composite. Ces fibres peuvent être réalisées en fils de cuivre ou en fibres optiques. Leur rupture signifie un début d'endommagement du longeron, ceci pouvant être contrôlé automatiquement.

Le nombre de tours d'enroulement de la nappe 104 dépend de l'épaisseur e souhaitée.

L'écartement E est déterminé en fonction de l'empattement du bogie alors que l'épaisseur e résulte du calcul des rigidités établi en fonction de la charge prévu sur le longeron, notamment en fonction du type du véhicule V.

## Revendications

1. Bogie (1 ; 51) de véhicule ferroviaire (V), ledit bogie étant en appui sur des roues (5, 5' ; 55) réparties sur au moins deux essieux (A-A', B-B'), des longerons (6, 6' ; 56) étant prévus pour relier lesdits essieux à une partie centrale (2 ; 52) dudit bogie, **caractérisé en ce que** lesdits longerons (6, 6' ; 56) sont formés d'une lame élastique conformée en boucle aplatie et située dans un plan globalement vertical, alors que ladite lame est disposée perpendiculairement audit plan.

2. Bogie selon la revendication 1, **caractérisé en ce que** ladite lame élastique (6, 6') est réalisée en matériau composite à base de résine en matière plastique chargée de fibres de renfort.

3. Bogie selon la revendication 1, **caractérisé en ce que** ladite lame élastique (56) est réalisée en métal, de préférence en acier à ressort.

4. Bogie selon l'une des revendications précédentes, **caractérisé en ce qu'**il comprend au moins un amortisseur (64) disposé dans le volume intérieur dudit longeron (6, 6' ; 56).

5. Bogie selon l'une des revendications précédentes, **caractérisé en ce que** ladite lame élastique (6, 6' ; 56) est constituée de deux âmes allongées (6a, 6b ; 56a, 56b) et de deux zones courbes (6c, 6d ; 56c) fixées par rapport à des boîtes à essieu (4, 4' ; 54) desdits roues (5, 5' ; 55).

6. Bogie selon la revendication 5, **caractérisé en ce qu'**au moins une boîte à essieu (4, 4' ; 54) comprend une partie en saillie (7, 7' ; 57)autour de laquelle est disposée une zone courbe (6c, 6d ; 56c) de ladite lame élastique (6, 6' ; 56).

7. Bogie selon la revendication 6, **caractérisé en ce que** ladite zone courbe (6c, 6d ; 56c) de ladite lame élastique (6, 6' ; 56) et fixée sur ladite partie en saillie (7, 7' ; 57) de ladite boîte à essieu (4, 4' ; 54) par collage ou mécaniquement.

8. Bogie selon l'une des revendications 6 ou 7, **caractérisé en ce que** ladite partie en saillie (57) comprend deux surfaces (57a, 57b) globalement opposées contre lesquelles sont aptes à venir en appui des surfaces correspondantes (56e, 56f) desdites âmes allongées (56a, 56b) de ladite lame élastique (56).

9. Bogie selon l'une des revendications précédentes, **caractérisé en ce qu'**il comprend deux longerons (6, 6' ; 56) formés chacun d'une lame élastique, lesdits longerons étant reliés à un châssis commun (2 ; 52).

10. Bogie selon les revendications 5 et 9, **caractérisé en ce que** chaque longeron (6, 6' ; 56) est relié audit châssis (2 ; 52) au niveau d'une âme supérieure (6a ; 56a) et au niveau d'une âme inférieure (6b ; 56b) de la boucle aplatie qu'il forme.

11. Procédé de fabrication d'un longeron (6, 6') de bogie (1) de véhicule ferroviaire (V), **caractérisé en ce qu'**il consiste à :
- enrouler une nappe (104) continue de fibres de renfort sur au moins un tour autour de deux plots (101, 102), de façon à former une boucle (105) autour desdits deux plots et
- faire polymériser une matrice à base de résine autour desdits fibres.

12. Procédé selon la revendication 11, **caractérisé en ce qu'**il consiste à adapter l'écartement (E) desdits plots (101, 102) en fonction de l'empattement et/ou de la charge prévue dudit longeron.

13. Procédé selon la revendication 11, **caractérisé en ce qu'**il consiste à adapter le nombre de tours d'enroulement de ladite nappe autour desdits plots en fonction des dimensions (e) et/ou de la rigidité prévues dudit longeron.

## Patentansprüche

1. Drehgestell (1; 51) für ein Schienenfahrzeug (V), wobei das Drehgestell im Auflager mit Rädern (5, 5'; 55) ist, die auf mindestens zwei Achsen (A-A', B-B') verteilt sind, wobei Längsträger (6, 6'; 56) vorgesehen sind, um die Achsen mit einem Mittelteil (2; 52) des Drehgestells zu verbinden, **dadurch gekennzeichnet, dass** die Längsträger (6, 6'; 56) aus einem als abgeflachte Schleife ausgebildeten und in einer im Ganzen vertikalen Ebene befindlichen federnden Stab gebildet werden, wogegen der Stab senkrecht zu der Ebene angeordnet ist.

2. Drehgestell gemäß Anspruch 1, **dadurch gekennzeichnet, dass** der federnde Stab (6, 6') aus Verbundmaterial auf der Grundlage von mit Fasern zur Verstärkung beschicktem Kunststoffharz ausgeführt ist.

3. Drehgestell gemäß Anspruch 1, **dadurch gekennzeichnet, dass** der federnde Stab (56) aus Metall, vorzugsweise aus Federstahl, ausgeführt ist.

4. Drehgestell gemäß einem der vorhergehenden Ansprüche, **dadurch gekennzeichnet, dass** es mindestens einen Stoßdämpfer (64) umfasst, der im Innenraum des Längsträgers (6, 6'; 56) angeordnet ist.

5. Drehgestell gemäß einem der vorhergehenden Ansprüche, **dadurch gekennzeichnet, dass** der federnde Stab (6, 6'; 56) aus zwei länglichen Stegen (6a, 6b; 56a, 56b) und zwei gekrümmten, in Bezug auf Achslager (4, 4'; 54) der Räder (5, 5'; 55) festgelegten Bereichen (6c, 6d; 56c) besteht.

6. Drehgestell gemäß Anspruch 5, **dadurch gekennzeichnet, dass** mindestens ein Achslager (4, 4'; 54) einen vorstehenden Teil (7, 7'; 57) umfasst, um den herum ein gekrümmter Bereich (6c, 6d; 56c) des federnden Stabes(6, 6'; 56) angeordnet ist.

7. Drehgestell gemäß Anspruch 6, **dadurch gekennzeichnet, dass** der gekrümmte Bereich (6c, 6d; 56c) des federnden Stabes (6, 6'; 56) an dem vorstehenden Teil (7, 7'; 57) des Achslagers (4, 4'; 54) mittels Kleben oder auf mechanische Art befestigt ist.

8. Drehgestell gemäß einem der Ansprüche 6 oder 7, **dadurch gekennzeichnet, dass** der vorstehende Teil (57) zwei im Ganzen gegenüberliegende Oberflächen (57a*,* 57b) umfasst, gegen die zugeordnete Oberflächen (56e, 56f) der länglichen Stege (56a, 56b) des federnden Stabes (56) in Auflager zu kommen geeignet sind.

9. Drehgestell gemäß einem der vorhergehenden Ansprüche, **dadurch gekennzeichnet, dass** es zwei Längsträger (6, 6'; 56) umfasst, die jeweils aus einem federnden Stab gebildet sind, wobei diese Längsträger mit einem gemeinsamen Fahrgestell (2; 52) verbunden sind.

10. Drehgestell gemäß den Ansprüchen 5 und 9, **dadurch gekennzeichnet, dass** jeder Längsträger (6, 6'; 56) mit dem Fahrgestell (2; 52) auf der Höhe eines oberen Steges (6a, 56a) und auf der Höhe eines unteren Steges (6b; 56b) der abgeflachten Schleife, die er bildet, befestigt ist.

11. Verfahren zur Herstellung eines Längsträgers (6, 6') für ein Drehgestell (1) für ein Schienenfahrzeug (V), **dadurch gekennzeichnet, dass** es besteht aus:
Aufrollen eines fortlaufenden Bündels (104) aus Fasern zur Verstärkung mit mindestens einer Windung um zwei Klötze (101, 102) herum, so dass eine Schleife (105) um die beiden Klötze herum gebildet wird, und
Polymerisieren lassen einer Matrix auf Harzgrundlage um die Fasern herum.

12. Verfahren nach Anspruch 11, **dadurch gekennzeichnet, dass** es daraus besteht, den Abstand (E) der Klötze (101, 102) in Abhängigkeit von dem Radstand und/oder der vorgesehenen Belastung des Längsträgers anzupassen.

13. Verfahren nach Anspruch 11, **dadurch gekennzeichnet, dass** es daraus besteht, die Anzahl der Windungen des Bündels um die Klötze herum in Abhängigkeit von den Abmaßen (e) und/oder der Starrheit, die für den Längsträger vorgesehen sind, anzupassen.

## Claims

1. Bogie (1; 51) for a railway vehicle (V), this bogie bearing on wheels (5, 5'; 55) distributed over at least two axles (A-A', B-B'), sole-bars (6, 6'; 56) being provided to link the said axles to a central part (2; 52) of the said bogie, **characterised in that** the said sole-bars (6, 6'; 56) are made of an elastic leaf shaped as a flattened loop and located in a plane that is vertical on the whole, whilst the said leaf is arranged perpendicularly to the said plane.

2. Bogie according to Claim 1, **characterised in that** the said elastic leaf (6, 6') is made of composite material based on resin of plastic material loaded with reinforcing fibres.

3. Bogie according to Claim 1, **characterised in that** the said elastic leaf (56) is made of metal, preferably of spring steel.

4. Bogie according to one of the preceding claims, **characterised in that** it has at least one damper (64) arranged in the interior volume of the said sole-bar (6, 6'; 56).

5. Bogie according to one of the preceding claims, **characterised in that** the said elastic leaf (6, 6'; 56) consists of two elongated webs (6a, 6b; 56a, 56b) and two curved zones (6c, 6d; 56c) fixed with respect to the axle boxes (4, 4'; 54) of the said wheels (5, 5'; 55).

6. Bogie according to Claim 5, **characterised in that** at least one axle box (4, 4'; 54) has a protruding part (7, 7'; 57) around which a curved zone (6c, 6d; 56c) of the said elastic leaf (6, 6'; 56) is arranged.

7. Bogie according to Claim 6, **characterised in that** the said curved zone (6c, 6d; 56c) of the said elastic leaf (6, 6'; 56) and (sic) fixed on the said protruding part (7, 7'; 57) of the said axle box (4, 4'; 54) by bonding or mechanically.

8. Bogie according to one of Claims 6 or 7, **characterised in that** the said protruding part (57) has two surfaces (57a, 57b) that are opposite on the whole, against which corresponding surfaces (56e, 56f) of the said elongated webs (56a, 56b) of the said elastic leaf (56) are able to come to bear.

9. Bogie according to one of the preceding claims, **characterised in that** it has two sole-bars (6, 6'; 56) each formed by an elastic leaf, the said sole-bars being connected to a common chassis (2; 52).

10. Bogie according to Claims 5 and 9, **characterised in that** each sole-bar (6, 6'; 56) is connected to the said chassis (2; 52), at the level of an upper web (6a; 56a) and at the level of a lower web (6b; 56b) of the flattened loop which it forms.

11. Process for the manufacture of a sole-bar (6, 6') of a bogie (1) for a railway vehicle (V), **characterised in that** it consists in:
- winding a continuous fleece (104) of reinforcing fibres, over at least one revolution, around two studs (101, 102) so as to form a loop (105) around these two studs and
- polymerising a resin-based matrix around these fibres.

12. Process according to Claim 11, **characterised in that** it consists in adapting the spacing (E) of the said studs (101, 102) according to the wheelbase and/or the load envisaged on the said sole-bar.

13. Process according to Claim 11, **characterised in that** it consists in adapting the number of revolutions of winding of the said fleece around the said studs according to the envisaged dimensions (e) and/or rigidity of the said sole-bar.
